# EUROPEAN PATENT APPLICATION

(11) **EP 3 444 721 A1**
(43) Date of publication of application: **20.02.2019**
(21) Application number: 16898510.9
(22) Date of filing: 06.12.2016
(51) Int. Cl.: G06F 9/445

(54) **METHOD AND APPARATUS FOR CLEARING UP PROCESS, AND STORAGE MEDIUM**

(30) Priority: 14.04.2016 CN 201610232104
(71) Applicant: ZTE Corporation, Shenzhen, Guangdong 518057 (CN)
(72) Inventor: HUANG, Qinbo, Shenzhen Guangdong 518057 (CN)
(74) Representative: Petit, Maxime
(86) International application number: PCT/CN2016/108722
(87) International publication number: WO 2017/177698

(57) **Abstract**

A method for clearing up a process, including: acquiring running processes of all applications; monitoring various current applications, and determining an application, of which a functional item is being used, as an application which currently needs to be temporarily protected; and clearing up the processes, and reserving, during clearing, a process of the application which needs to be temporarily protected. Further disclosed are an apparatus for clearing up a process and a storage medium, which can dynamically determine, according to a user use situation, whether a relevant process needs to be cleared up, and also overcome, on the basis of effectively solving the problem that an electronic device is blocked and slow, the drawback that the process is easily cleared up by mistake, thereby improving the efficiency and accuracy of clearing up the process, and effectively improving the user experience without needing a user to make more settings.

## Description

### TECHNICAL FIELD

The present disclosure relates to a field of computer network technology, in particular, to a method and apparatus for clearing up process and storage medium.

### BACKGROUND

According to research data from a third-party, 77% of Android users admit that they have experienced slowdown of electronic devices. There are more than 4.6 million results when searching "Android + slowly" on Baidu. In the industry, Android electronic devices have always had a reputation of "slower and slower". This phenomenon is even beyond hardware, in other words, hardware parameters of many secondary and advanced Android electronic devices are better than that of the same generation iPhone, but those Android electronic devices will still enter the "unsmooth" state after half a year to a year.

To solve the problem of slowing down of an electronic device, it is necessary to clear up processes of the electronic device in time. Currently, a commonly used method for clearing up process is to list all running processes, and then providing a default status for clearing or not by a preset set of black and white lists, and then manually selecting which processes of applications to be cleared up or "one-click clearing" according to the default status even "background accelerated" by user.

The problem of the above method is that if a user does not or does not want to set up a white list, it is likely that some applications that require temporary protection will be cleared up, such as an application currently running for listening to audio books, an application currently running for caching video movies, or a map application currently running for navigating. It will cause bad user experience when these currently running applications are cleared up by mistake, and when these applications are not in use and just running in the background, they will consume a lot of resources such as CPU and memory, and even consume a lot of traffic, such that they need to be cleared up in time. Therefore, the above method will cause either overprotecting processes with the result that unnecessary processes cannot be cleared up in time and the processes will consume CPU or memory resources, causing electronic devices to be slow, or over clearing up processes with the result that applications currently running for use are cleared up by mistake, causing bad user experience and even causing functional problems of some applications or systems.

In addition, the above method is a relatively "static" clearing. In most scenarios, usage status of respective application processes is constantly changing when users use the electronic device. Therefore, processes that need to be cleared up are also dynamically changed. By using the above method, users need to frequently modify protected status of applications, that is, frequently modify the white list, in order to adapt to the changing usage scenarios, which is difficult to operate, easy to operate by mistake, and wasting time and energy.

Therefore, a new process clearing technology is needed, which can dynamically determine whether relevant processes need to be cleared up according to a user's usage condition, without too many settings by the user, and can prevent processes from being cleared up by mistake, thereby further effectively solving the problem of slowness of electronic devices and improving user experience.

### SUMMARY

In order to solve the above technical problem, the present disclosure provides a method and apparatus for clearing up process and storage medium, which dynamically determines whether relevant processes need to be cleared up according to a user usage condition, which not only prevents useful processes from being cleared up by mistake, but also can dynamically clear up processes according to the changing usage scenarios.

In order to achieve the purpose of the present disclosure, the present disclosure provides a method for clearing up process. The method may include: acquiring running processes of all applications; monitoring the current process usage status of each application, and determining applications having function item being used as applications needing to be temporarily protected; clearing up processes and reserving the processes of the applications needing to be temporarily protected during clearing.

In one embodiment, the method further includes: presetting a package name and group information of each application, wherein the group information corresponds to hardware and function classification attributes of the application; the step of monitoring the current process usage status of each application and determining applications being used includes: detecting function items being used; and comparing the function items being used with each application according to the package name and the group information of each application, if any one, two or more function items of the application are being used, it is determined that the application is in use.

In one embodiment, the method further includes: configuring a protection list for the applications; the step of clearing up processes and reserving the processes of the applications needing to be temporarily protected during clearing specifically refers to: reserving processes corresponding to the protection list and the processes of the applications needing to be temporarily protected.

In one embodiment, when a foreground process clearing function is enabled, the method further including: listing all of the functional items that can be detected to be in use currently, determining the usage status of each function item, filtering out the function items being used, and creating a list of usage status of the function items; listing the package name of the applications corresponding to the running processes, comparing the applications with the function items in the list of usage status of the function items according to the group information of the applications, and determining whether the function items corresponding to the applications are in use; identifying the processes as a no-clearing state when the corresponding function items are being used and the processes are running, and keeping the processes in default state when the corresponding function items are not being used; manually clearing up processes, and reserving the processes identified as no-clearing during clearing.

In one embodiment, the method further including: giving a user a hint in process information of the processes to remind the user after modifying the processes to the no-clearing state.

When a background process clearing function is enabled, the method further including: acquiring the package names of all running processes and their applications; determining applications including a network cache backup function item and collecting a processes list of the applications according to the package name and the group information; determining whether the network cache backup function corresponding to each process of the process list is in use, and if yes, adding the process to a process automatic clearing ignore list, wherein the processes in the process automatic clearing ignore list will be ignored during automatic clearing; automatically clearing up processes, and reserving the corresponding processes of the process automatic clearing ignore list during clearing.

In one embodiment, the method further including: triggering the background automatic clearing process after detecting that an electronic device turns to a blank screen state.

In one embodiment, the determining whether the network cache backup function of each process of the process list is in use including: acquiring a traffic change value of the application corresponding to the process within a specified time, determining whether the traffic change value is greater than a preset threshold, and if yes, it indicates that cache backup function of the application is in use; otherwise, it indicates that cache backup function of the application is not in use.

An apparatus for clearing up process, including a process management module and a usage status determination module, wherein the usage status determination module is configured to monitor a current process usage status of each application and determine applications needing to be temporarily protected; the process management module is configured to acquire running processes of all applications and is configured to clear up processes, and reserve processes of the applications needing to be temporarily protected determined by the usage status determination module during clearing.

In one embodiment, the apparatus further comprises an application classification knowledge base, which is configured to preset and save a package name and group information of each application, wherein the group information is used to describe hardware and function classification attributes of an application; the usage status determination module configured to detect a function item being used, and compare the function item being used with each application according to the package name and the group information of each application in the application classification knowledge base, if any one, two or more function items of the application are being used, it is determined that the application is in use.

In one embodiment, the apparatus further includes a protection list control module configured to set and maintain the protection list for applications; and the usage status determination module is configured to reserve processes corresponding to the protection list and the processes of the applications needing to be temporarily protected, and clear up other applications.

In one embodiment, the process management module is further configured to enable the foreground process clearing function; and when the foreground process clearing function is enabled, configured to identify the processes as a no-clearing state when it is determined by the usage status determination module that the corresponding function item is being used and the processes are running; and keep the processes in default state when the corresponding function items are not being used; and is configured to manually clear up processes according to the status of the process; the usage status determination module is configured to list all function items that can be detected in real time when the foreground process clearing function is enabled, and determine the usage status of each function item, and filter out the function items being used, and create a list of usage status of the function items; and configured to list the package names of the applications corresponding to the running processes, and compare the applications with the function items in the list of usage status of the function items according to the group information of the applications, and determine whether the function items corresponding to the applications are in use.

In one embodiment, wherein a process management module is further configured to give a hint in process information of the processes to remind a user after modifying the processes to a no-clearing state.

In one embodiment, the process management module is further configured to enable the background process clearing function; and when the background process clearing function is enabled, configured to acquire all running processes and the package name of application; and configured to add the process to a process automatic clearing ignore list when a network cache backup function corresponding to the process is in use, and processes in the process automatic clearing ignore list are ignored during automatic clearing; and configured to automatically clear up processes according to the process automatic clearing ignore list; the usage status determination module is configured to determine applications including the network cache backup function item and collect a processes list of the applications according to a package name and group information of the applications when the background process clearing function is enabled; and determine whether the network cache backup function corresponding to each process of the process list is in use.

In one embodiment, the process management module is configured to trigger and enable the background process clearing function after detecting that the electronic device turns to a blank screen state.

In one embodiment, the usage status determining module is configured to acquire a traffic change value of the application corresponding to the process within a specified time, and determine whether the traffic change value is greater than a preset threshold, and if yes, it indicates that cache backup function of the application is in use; otherwise, it indicates that cache backup function of the application is not in use.

The embodiment of present disclosure also provides a computer storage medium storing computer executable instructions, wherein the computer executable instructions are used for performing the above methods for clearing up process.

Compared with the prior art, the embodiment of the present disclosure can monitor current usage status of each application, determine applications that need temporary protection, and selectively clear up the processes according to applications that need temporary protection. In this way, it is possible to dynamically determine whether relevant processes need to be cleared up according to the user's usage status, and on the basis of effectively solving the problem of slowness of the electronic device, it also overcomes the defect that the process is easily to be cleared up by mistake, improves the efficiency and accuracy of the process clearing, and does not need too many user settings and has effectively improved user experience.

Other features and advantages of the disclosure will be set forth in the description which follows and partly become apparent from the description, or will be understood by implementing the disclosure. The objectives and other advantages of the disclosure will be realized and attained by the structure particularly specified in the description and claims.

### BRIEF DESCRIPTION OF THE DRAWINGS

The drawings are used to further understand the technical solutions of the present disclosure, constitute a part of the specification, and are used to explain the technical solutions of the present disclosure together with the embodiments of the present application, without limiting the technical solutions of the present disclosure.
FIG. 1 is a schematic flowchart of a method for clearing up process according to an embodiment of the present disclosure;
FIG.2 is a schematic structural diagram of an apparatus for clearing up process according to an embodiment of the present disclosure;
FIG.3 is a schematic flowchart diagram of clearing up process commonly used in various scenarios according to an embodiment of the present disclosure;
FIG.4 is a schematic flowchart of a foreground process clearing according to an embodiment of the present disclosure; and
FIG. 5 is a schematic flowchart of a background process clearing according to an embodiment of the present disclosure.

### DETAILED DESCRIPTION OF THE EMBODIMENTS

The embodiments of the present disclosure will be described in detail below with reference to the accompanying drawings. It should be noted that, the features in the embodiments and the embodiments in the present application may be combined with each other arbitrarily, unless conflicting.

The steps illustrated in the flowchart diagram of the accompanying figures may be executed in a computer system provided with a set of computer executable instructions, for example. Furthermore, although logical sequences are shown in the flowchart diagrams, the steps shown or described may be performed in different sequences with the ones described herein in some cases.

### Embodiment 1

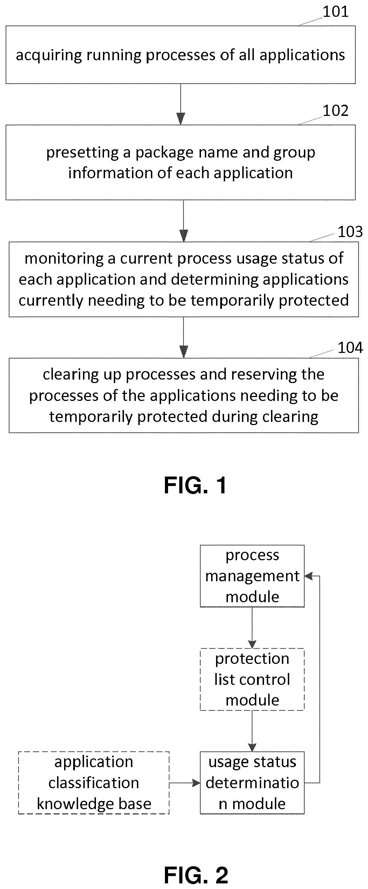

As shown in FIG. 1, an embodiment of the present disclosure provides a method for clearing up process. The method may include the following steps 101 to 104.

At step 101, acquiring running processes of all applications.

At step 102, presetting a package name and group information of each application, wherein the group information corresponds to hardware and function classification attributes of the application.

At step 103, monitoring a current process usage status of each application, and determining applications currently needing to be temporarily protected.

Further, the step of monitoring the current process usage status of each application and determining applications being used includes: monitoring hardware usage status of an electronic device, detecting function items being used; and comparing the function items being used with each application according to the package name (the package name of the same application in different device platforms may be different) and the group information of each application, if any one, two or more function items of the application are being used, it being determined that the application is in use.

At step 104, clearing up processes and reserving the processes of the applications needing to be temporarily protected during clearing.

Further, the method may further include: configuring a protection list for the applications. The step of clearing up processes and reserving the processes of the applications needing to be temporarily protected during clearing specifically refers to: selectively clearing up the processes according to the protection list for the applications and the applications currently needing to be temporarily protected. Here, the protection list for the applications is actually a static list. Applications that are commonly used and important can be listed in the protection list for the applications, based on a system default configuration or a user default configuration. The processes corresponding to the applications in the list will be set as a no-clearing status when clearing up the processes.

In the embodiment of the present disclosure, it is determined whether the main function of the electronic device is being used, thereby determining whether the processes corresponding to the relevant applications need to be temporarily protected. The strategies of clearing up the processes can be dynamically adjusted according to actual application condition of the electronic device without excessive setting by the user. On the basis of effectively solving the slow problem of the electronic device, the problem of the processes being cleared up by mistake is further solved, and there is no need for the user to excessively participate, and thus the user experience is also improved.

### Embodiment 2

As shown in FIG. 2, an embodiment of the present disclosure further provides an apparatus for clearing up process. The apparatus for clearing up process may include: a process management module, a protection list control module, an application classification knowledge base, and a usage status determination module. The usage status determination module is configured to monitor a current process usage status of each application and determine applications needing to be temporarily protected. The process management module is configured to acquire running processes of all applications; and is configured to clear up processes, and reserve the processes of the applications needing to be temporarily protected determined by the usage status determination module during clearing. The application classification knowledge base is configured to preset and save a package name and group information of each application, wherein the group information is used to describe hardware and function classification attributes of the application.

Here, the apparatus may further include: a protection list control module configured to set and maintain the protection list for applications. The protection list control module mainly maintains a static list, which is the protection list. The protection list includes applications to be particularly protected which are preset and commonly used, to avoid processes of the applications being cleared up. Common applications preset are key applications such as WeChat and Weibo. Users can modify this list according to their actual usage status afterward.

Practically, the process management module is configured to selectively clear up the processes according to the protection list for the applications and the applications currently needing to be temporarily protected determined by the usage status determination module. The process management module is mainly configured to acquire running processes of all installed applications, and selectively clear up the processes according to the protection list control module and the usage status determining module.

Practically, the usage status determination module is mainly configured to monitor the usage status of the hardware of electronic devices, find the corresponding applications by combining the application classification knowledge base, and determine applications being used by the user, thereby determining the processes of the applications needing to be temporarily protected, so as to dynamically adjust the strategies of clearing up the processes while avoiding processes being cleared up by mistake. Specifically, the usage status determining module is configured to monitor hardware usage of the electronic device, detect function items being used, and compare the function items being used with each application according to the package name and the group information of each application in the application classification knowledge base, if any one, two or more function items of the application are being used, it is determined that the application is in use.

In general, process clearing is divided into two scenarios: foreground manual clearing and background automatic clearing. More often, the background automatic clearing process is needed. For example, automatic process clearing is enabled when the electronic device has a blank screen. The usage status determination module of the embodiment of the present disclosure can be used not only as the background process clearing, but also as a reference to the foreground manual process clearing operated by users, so that the users can selectively clear up the process according to requirement.

As for foreground manual clearing scenario, the process management module is configured to enable the foreground process clearing function; and when the foreground process clearing function is enabled, the process management module is configured to identify the processes as a no-clearing state when it is determined by the usage status determination module that the corresponding function items are being used and the processes are running, and to keep the processes as default processes when it is determined by the usage status determination module that the corresponding function items are not being used; and is configured to manually clear up processes according to the status of the process. The usage status determination module is configured to list all of the function items that can be detected in real time when the foreground process clearing function is enabled, determine the usage status of each function item, filter out the function items being used, and create a list of usage status of the function items; and configured to list the package names of the applications corresponding to the running processes, compare the applications with the function items in the list of usage status of the function items according to the group information of the applications, and determine whether the function items corresponding to the applications are in use. Here, the process clearing module is further configured to give the user a hint in process information of the processes to remind the user after modifying the processes to a no-clearing state.

As for the background automatic clearing scenario, the process management module is configured to enable the background process clearing function; and when the background process clearing function is enabled, configured to acquire all running processes and the package name of applications thereof; and configured to add the process to the process automatic clearing ignore list when a network cache backup function corresponding to the process is in use, and processes in the process automatic clearing ignore list are ignored during automatic clearing; and configured to automatically clear up processes according to the process automatic clearing ignore list. The usage status determination module is configured to determine applications including the network cache backup function item and collect a processes list of the applications according to a package name and the group information of the applications when the background process clearing function is enabled; configured to determine whether the network cache backup function corresponding to each process of the process list is in use. The process management module is configured to trigger and enable the background process clearing function after detecting that the electronic device turns to a blank screen state. The usage status determining module is configured to: acquire a traffic change value of the application corresponding to the process within a specified time, determine whether the traffic change value is greater than a preset threshold, and if yes, it indicates that cache backup function of the application is in use; otherwise, it indicates that cache backup function of the application is not in use.

The apparatus of the embodiments of the present disclosure may be configured to use in an electronic device, the electronic device including the apparatus for the clearing up process described above. Practically, the electronic device can be any terminal device, such as a mobile terminal (mobile phone, tablet, wearable device, etc.), a client (such as a teller machine, etc.) and so on.

### Embodiment 3

This embodiment describes the specific implementation process of clearing up processes in the general scenario.

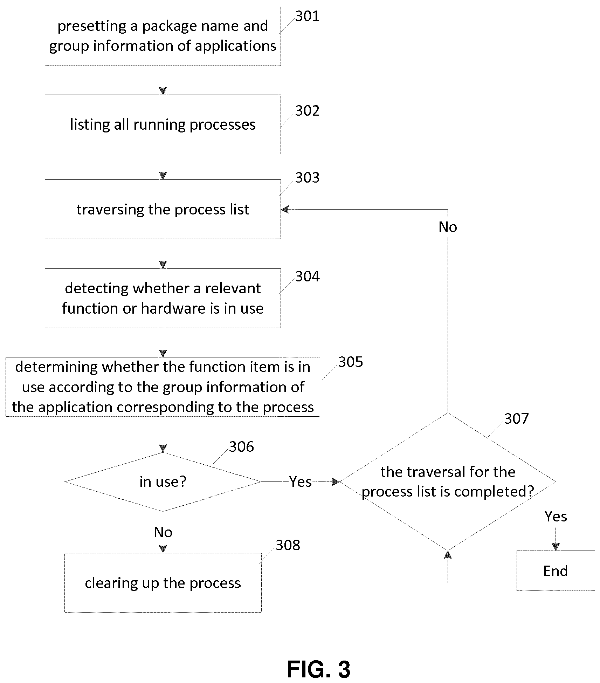

As shown in FIG. 3, the following steps 301 to 308 may be specifically included.

At step 301, presetting a package name and group information of each application.

Specifically, the package name of each application and its corresponding grouping information may be preset in the electronic device, and may be set in the form of a list. The group information is used to describe hardware and function classification attributes of the application. For example, GPS chip corresponds to all map navigation applications, an audio hardware corresponds to all audio books, radio and music applications; a cache download application using traffic; a flashlight and video application using LED; near field communication relevant applications using Bluetooth and infrared, etc.

At step 302, listing all running processes of applications installed on the electronic device.

Here, general applications can be acquired through the platform interface after applying relevant permission, and the running process is saved or presented in the form of a process list.

At step 303, traversing the process list.

At step 304, detecting whether a relevant function or hardware is in use.

For example, in the detecting, function items may include audio functions (corresponding to listening to audio books, radio, recording, playing music, etc.), traffic caching functions (corresponding to video caching, software downloading, news caching, etc.), navigation functions (corresponding to map navigation, etc.) and so on. The actual application, according to the user's needs, as well as application characteristics of the electronic device itself, can be monitored in real time after subdividing function items to make accurate decisions and ensure clearing accuracy of the process.

At step 305, determining whether the function items are in use according to the group information of the applications corresponding to the processes.

At step 306, if the function items corresponding to the application are in use, the process will not be cleared up and proceeding to step 307; if the function items corresponding to the applications are not in use, then proceeding to step 308.

For example, if the process of the navigation application is running and its navigation function (GPS) is also running, clearing is ignored for the navigation process. When the application for listening to audio books and music radio is running while audio is in the active state, clearing is intelligently ignored for the process, otherwise proceeding to step 308;

At step 307, determining whether the traversal for the process list is completed, if not, return to step 303, and if yes, end the entire flow.

At step 308, clearing up the process to save consuming of the memory and CPU of the electronic device without causing a bad user experience.

### Embodiment 3

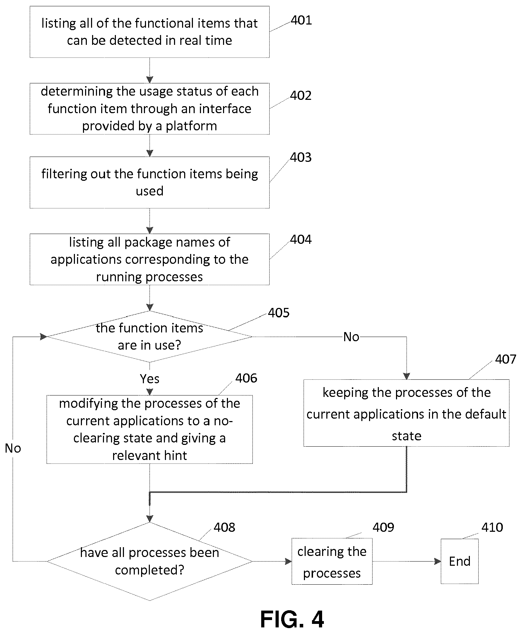

The following is a detailed description of the specific implementation of the method for clearing up process of the embodiment of the present disclosure in the foreground manual clearing scenario. As shown in FIG. 4, the specific implementation of the foreground clearing process may include the following steps 401 to 410.

At step 401, listing all of the functional items that can be detected in real time.

Here, all of the function items in the current electronic device that can be detected in real time are searched, and all of the function items searched are listed in the form of a list. The function items include, but not limited to, a current desktop function of the electronic device, an audio function being played, a map function being navigated, and the like;

At step 402, determining the usage status of each function item through an interface provided by a platform.

Practically, if the electronic device does not support such a determination function currently, the corresponding function may be added by means of software extension, and the specific implementation process may be implemented based on relevant technologies, and will not be described here.

At step 403, filtering out the function items being used, and create a list of usage status of the function items.

At step 404, listing all package names of applications corresponding to the running processes.

At step 405, associating applications with a list of usage status of the function items, and determining whether the function items of the application is in use, and if yes, proceeding to step 406, otherwise proceeding to step 407.

Specifically, the application is associated with the function items of the list of usage status of the function items according to the package name and group information of the application.

For example, with respect to a map application, since its function item relates to navigation in its group information, and the navigation function is in use, the navigation function is associated with the map application.

At step 406, modifying the processes of the current applications to a no-clearing state and giving a relevant hint to proceeding to step 408 if the corresponding function items are in use and the processes corresponding to the current applications are running;

For example, the process of the map application is automatically modified to a no-clearing state and a hint "Navigating" is indicated in the process information to remind the user that clearing up the process may cause navigation to stop, if the process of the map application is running and the navigation function is also being used;

At step 407, keeping the processes of the current applications in the default state if the corresponding function items are not in use;

For example, the process of the map application is running, but the navigation function is not in use at present, and the process of the map application is configured to be cleared up/not to be cleared up according to the default clearing state preset by user or system.

At step 408, determining whether all processes have been completed, if not, proceeding to step 405, and if yes, proceeding to step 409.

At step 409, clearing up the processes in the clearing state from the list of processes ongoing, and ignoring the processes in a no-clearing state.

At step 410: end all processes.

As shown in Table 1 below, it is an example of a process list in the foreground manual clearing scenario.

**Table 1**

| Application | Size | Usage status |
|---|---|---|
| KUGOU Music | 100M | playing music |
| MiHome | 90M | current desktop |
| Baidu Map | 80M | navigating |
| Tencent video player | 70M | caching video |
| *** | **M | *** |

Practically, the clearing status (protected state) of a set of commonly used applications and corresponding classifications thereof can be preset. The main categories are map navigation, music radio and audio books, network backup and recovery and transmission mail, and so on.

In the embodiment of the present disclosure, the non-functional application processes can be processed in a default manner. The foreground manual clearing is suitable for detecting those faster authentication functions because of high real-time requirements, and giving descriptive hints and default clearing status for application processes. Users can clear up processes based on these hints and default clearing status.

### Embodiment 4

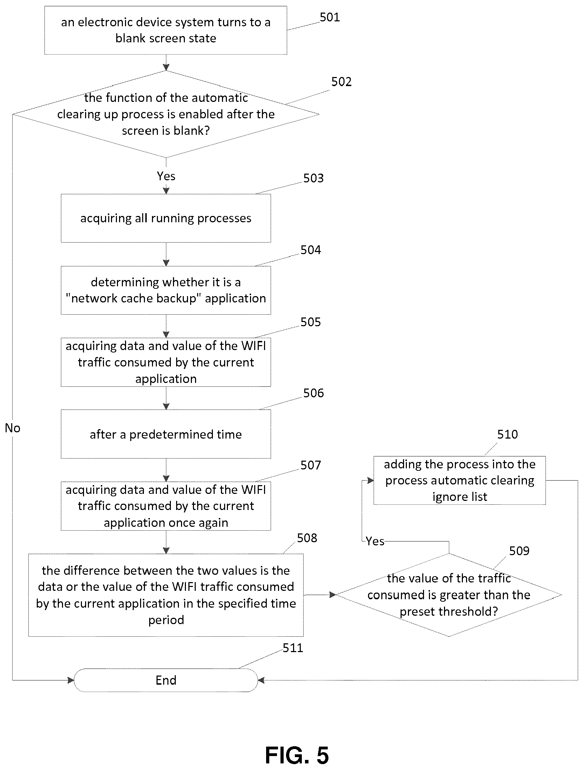

The following is a detailed description of the specific implementation of the method for clearing up processes of the embodiment of the present disclosure in the background automatic clearing scenario. As shown in FIG. 5, the implementation process of the background automatic clearing may mainly include the following steps 501 to 511.

At step 501, triggering a background automatic clearing up process when an electronic device system turns to a blank screen state.

At step 502, proceeding to step 502 if the function of the automatic clearing up process is enabled after the screen is blank; otherwise, proceeding to step 511 to end all procedures.

At step 503, acquiring the package names of all running processes and their applications.

At step 504, determining whether it belongs to the "network cache backup" application according to the application package names and group information preset by the system, and if yes, proceeding to the next step; and if not, processing according to the prior art.

At step 505, collecting a process list of all currently running "network cache backup" applications of the electronic device, recording the current time, and recording data and value of the WIFI traffic consumed by the current application.

At step 507, recording the data and the value of the WIFI traffic consumed by the current application once again after a predetermined time (for example, 10 seconds).

At step 508, subtracting the value of traffic acquired in step 506 from the value of traffic of each process in the process list in step 505 acquired in step 507 for each process in the process list in step 505, to acquire the value of traffic consumed by the current application in the specified time period.

At step 509, determining whether the value of traffic consumed by the current application is greater than a preset threshold, and if the value of traffic is greater than the preset threshold, such as 1M, it indicates that the application caches data in the background, and the application process is added to the process automatic clearing ignore list.

At step 510, clearing up the process, ignoring the process in the process automatic clearing ignore list.

At step 511, the procedure is end.

The advantage of background automatic clearing is that the real-time requirements are not high, so some time-consuming function detection can be performed, such as function detection for which applications are caching data in background, it may need to detect which application is consuming traffic (data traffic or WIFI) during 10 seconds or longer, then for reference when clearing.

In the embodiment of the present disclosure, in an accelerating procedure of an electronic device, processes can be cleared up more intelligently no matter in the foreground or in the background, which prevents a user from setting a white list of process if he does not know how to do that and avoids trouble brought by modifying the white list of process frequently. Moreover, "mistakenly killing" a process can be effectively avoided by the embodiment of the present disclosure. The embodiment of the disclosure can dynamically adjust the clearing status of process based on the usage status of an electronic device, and overcome the disadvantage that the existing solution is excessively dependent on the "white list".

The application classification knowledge base in the apparatus for clearing up process in the embodiment of the present disclosure may be implemented by a memory, and the process management module, the usage status determination module, and the protection list control module may all be implemented by a processor, and may also be implemented by a specific logic circuit implementation; In the server on the processor electronic device, in practical applications, the processor can be a central processing unit (CPU), a microprocessor (MPU), a digital signal processor (DSP) or a field programmable gate array (FPGA), etc.

In the embodiment of the present disclosure, if the above method for clearing up process is implemented in the form of a software function module and sold or used as a stand-alone product, it may also be stored in a computer readable storage medium. Based on such understanding, the technical solutions of the embodiments of the present disclosure or the part of contribution to the prior art may be embodied in form of a software product in the form of a software product. The computer software product is stored in a storage medium and includes a plurality of instructions to perform all or part of the methods described in various embodiments of the present disclosure by a computer device (which may be a personal computer, server, or network device, etc). The above storage medium includes various media that can store program codes, such as a USB flash drive, a mobile hard disk, a read only memory (ROM), a magnetic disk, or an optical disk. Thus, embodiments of the disclosure are not limited to any specific combination of hardware and software.

Correspondingly, an embodiment of the present disclosure further provides a computer storage medium. The computer storage medium stores a computer program, and the computer program is used to execute the above method for clearing up process of the embodiment of the present disclosure.

While the embodiments of the present disclosure have been described above, the described embodiments are merely for the purpose of understanding the disclosure and are not intended to limit the disclosure. Any modification and variation in the form and details of the embodiments may be made by those skilled in the art without departing from the spirit and scope of the disclosure. The scope of present disclosure is defined by the appended claims.

## Claims

1. A method for clearing up process, comprising:
acquiring running processes of all applications;
monitoring a current process usage status of each application and determining applications having function item being used as application currently needing to be temporarily protected; and
clearing up processes, and reserving processes of the applications needing to be temporarily protected during clearing.

2. The method of claim 1, further comprising: presetting a package name and group information of each application, wherein the group information corresponds to hardware and function classification attributes of the application; and
the step of monitoring the current process usage status of each application and determining applications having function item being used as applications currently needing to be temporarily protected comprises:
detecting function items being used; and comparing the function items being used with each application according to the package name and the group information of each application, if any one, two or more function items of the application are being used, it is determined that the application needs to be temporarily protected.

3. The method of claim 1, further comprising: configuring a protection list for the applications; and
the step of clearing up processes and reserving processes of the applications needing to be temporarily protected during clearing comprises:
reserving processes corresponding to the protection list and the processes of the applications needing to be temporarily protected, and clearing up other applications.

4. The method of claim 2 or 3, wherein when a foreground process clearing function is enabled, the method further comprising:
listing all of the functional items that can be detected to be in use currently, determining the usage status of each function item, filtering out the function items being used, and creating a list of usage status of the function items;
listing the package name of the applications corresponding to the running processes, comparing the applications with the function items in the list of usage status of the function items according to the group information of the applications, and determining whether the function items corresponding to the applications are in use;
identifying the processes as a no-clearing state when the corresponding function items are being used and the processes are running, and keeping the processes in default state when the corresponding function items are not being used; and
manually clearing up processes, and reserving the processes identified as no-clearing during clearing.

5. The method of claim 4, further comprising: giving a user a hint in process information of the processes to remind the user after modifying the processes to the no-clearing state.

6. The method of claim 2 or 3, wherein when a background process clearing function is enabled, the method further comprising:
acquiring the package names of all running processes and their applications;
determining applications including a network cache backup function item and collecting a processes list of the applications according to the package name and the group information;
determining whether the network cache backup function corresponding to each process of the process list is in use, and if yes, adding the process to a process automatic clearing ignore list, wherein the processes in the process automatic clearing ignore list will be ignored during automatic clearing; and
automatically clearing up processes, and reserving the corresponding processes of the process automatic clearing ignore list during clearing.

7. The method of claim 6, further comprising: triggering the background process clearing function after detecting that an electronic device turns to a blank screen state.

8. The method of claim 6, wherein the step of determining whether the network cache backup function corresponding to each process of the process list is in use comprising:
acquiring a traffic change value of the application corresponding to the process within a specified time, determining whether the traffic change value is greater than a preset threshold,
and if yes, it indicates that cache backup function of the application is in use; otherwise, it indicates that cache backup function of the application is not in use.

9. A apparatus for clearing up process, comprising a process management module and a usage status determination module, wherein
the usage status determination module is configured to monitor a current process usage status of each application and determine applications needing to be temporarily protected;
the process management module is configured to acquire running processes of all applications; and is configured to clear up processes, and reserve processes of the applications needing to be temporarily protected determined by the usage status determination module during clearing.

10. The apparatus of claim 9, wherein the apparatus further comprises an application classification knowledge base configured to preset and save a package name and group information of each application, wherein the group information is used to describe hardware and function classification attributes of an application, and
the usage status determination module is configured to detect function items being used, and compare the function items being used with each application according to the package name and the group information of each application in the application classification knowledge base, if any one, two or more function items of the application are being used, it is determined that the application is in use.

11. The apparatus of claim 9, wherein
the apparatus further comprises a protection list control module configured to set and maintain a protection list for applications; and
the usage status determination module is configured to reserve processes corresponding to the protection list and the processes of the applications needing to be temporarily protected, and clear up other applications.

12. The apparatus of claim 9, wherein
the process management module is further configured to enable a foreground process clearing function; and when the foreground process clearing function is enabled, the process management module is configured to identify the processes as a no-clearing state when it is determined by the usage status determination module that the corresponding function items are being used and the processes are running; and keep the processes in default state when the corresponding function items are not being used; and is configured to manually clear up processes according to the status of the process;
the usage status determination module is configured to list all of the function items that can be detected in real time when the foreground process clearing function is enabled, determine the usage status of each function item, filter out the function items being used, and create a list of usage status of the function items; and is configured to list the package names of the applications corresponding to the running processes, compare the applications with the function items in the list of usage status of the function items according to the group information of the applications, and determine whether the function items corresponding to the applications are in use.

13. The apparatus of claim 12, wherein the process management module is further configured to give a hint in process information of the processes to remind a user after modifying the processes to the no-clearing state.

14. The apparatus of claim 9, wherein
the process management module is further configured to enable a background process clearing function; and when the background process clearing function is enabled, the process management module is configured to acquire all running processes and the package name of application; and is configured to add the process to a process automatic clearing ignore list when a network cache backup function corresponding to the process is in use, wherein processes in the process automatic clearing ignore list are ignored during automatic clearing; and is configured to automatically clear up processes according to the process automatic clearing ignore list;
the usage status determination module is configured to determine applications including the network cache backup function item and collect a processes list of the applications according to a package name and group information of the application when the background process clearing function is enabled; and determine whether the network cache backup function corresponding to each process of the process list is in use.

15. The of claim 14, wherein the process management module is configured to trigger and enable the background process clearing function after detecting that the electronic device turns to a blank screen state.

16. The of claim 14, wherein the usage status determining module is configured to acquire a traffic change value of the application corresponding to the process within a specified time, and determine whether the traffic change value is greater than a preset threshold, and if yes, it indicates that cache backup function of the application is in use; otherwise, it indicates that cache backup function of the application is not in use.

17. A computer storage medium storing computer executable instructions, wherein the computer executable instructions are used for performing any one of the method for clearing up process of claims 1-8.
